# EUROPEAN PATENT SPECIFICATION

(11) **EP 3 909 824 B1**
(45) Date of publication and mention of the grant of the patent: **01.11.2023**
(21) Application number: 20783254.4
(22) Date of filing: 06.03.2020
(51) Int. Cl.: B60W 50/00, B60W 30/10, G06N 20/00, B60W 60/00, B60W 40/08, B60W 30/12, B60W 40/10, B60W 40/12, B60W 50/029

(54) **VEHICLE TRAVEL CONTROL APPARATUS**
FAHRZEUGFAHRSTEUERUNGSVORRICHTUNG
APPAREIL DE COMMANDE DE DÉPLACEMENT DE VÉHICULE

(30) Priority: 29.03.2019 JP 2019066763
(43) Date of publication of application: 17.11.2021
(73) Proprietor: MAZDA MOTOR CORPORATION, Hiroshima 730-8670 (JP)
(72) Inventor: SAKASHITA Shinsuke, Aki-gun, Hiroshima 730-8670 (JP); HORIGOME Daisuke, Aki-gun, Hiroshima 730-8670 (JP); ISHIBASHI Masato, Aki-gun, Hiroshima 730-8670 (JP); HOJIN Eiichi, Aki-gun, Hiroshima 730-8670 (JP)
(74) Representative: Herrmann, Uwe
(86) International application number: PCT/JP2020/009774
(87) International publication number: WO 2020/203054

(56) References cited:
- WO-A1-2018/134901
- WO-A1-2018/134901
- CN-A- 109 455 180
- JP-A- 2017 182 347
- US-A1- 2018 356 828

## Description

### TECHNICAL FIELD

The present invention belongs to a technical field related to a vehicle cruise control device.

### BACKGROUND ART

There has been a known vehicle cruise control device which controls a plurality of vehicle-mounted units for traveling, which are mounted in a vehicle.

For example, Patent Document 1 discloses, as a vehicle cruise control device, a control system including unit controllers controlling the respective on-board units, a domain controller controlling the unit controllers as a whole, and an integrated controller controlling the domain controllers as a whole. The control system is divided into a plurality of domains corresponding to the respective functions of the vehicle-mounted units in advance. Each of the domains is stratified into a group of the unit controllers and the domain controller. The integrated controller dominates the domain controllers.

In Patent Document 1, the unit controllers each calculate a controlled variable of an associated one of the vehicle mounted units, and each output a control signal for achieving the controlled variable to the associated vehicle-mounted unit. Other cruise control systems are known from US 2018/356828 A1 and WO 2018/134901 A1.

### CITATION LIST

### PATENT DOCUMENT

Patent Document 1: Japanese Unexamined Patent Publication No. 2017-61278

### SUMMARY OF THE INVENTION

### TECHNICAL PROBLEM

In recent years, development of autonomous driving systems has been promoted nationally. In general, in an autonomous driving system, a camera, for example, acquires the information on the environment outside a vehicle, and the route to be traveled by the vehicle is calculated based on the acquired information on the vehicle external environment. Further, in the autonomous driving system, traveling devices are controlled to follow the route to be traveled.

In addition, the number of microcomputers to control devices related to body such as a door and a light is increasing in vehicles of recent years. In some vehicles, the number of microcomputers has increased as many as several hundreds per vehicle. However, it is not preferable to separately provide many microcomputers for controlling body-related devices and arithmetic unit in an autonomous driving system, because doing so will result in an intricate configuration and increased costs.

The technology disclosed here was made in view of the above-described point, and an object of the present invention is to enable control of devices related to a body with a simple configuration in a vehicle cruise control device that controls actuation of traveling devices so as to follow a route calculated by an arithmetic unit.

### SUMMARY OF THE INVENTION

An increase in the number of devices such as actuators and sensors and the like in an autonomous driving system leads to an extremely complicated configuration of on-board communications in terms of both software and hardware. To avoid such a complicated configuration, for example, a possible configuration of the system is such that control functions of the devices are incorporated in a central arithmetic unit, and the central arithmetic unit directly controls the devices via an on-board communication network.

Meanwhile, in a case of implementing the device control function into the central arithmetic unit, a loss in the speed of calculations for actual autonomous driving due to an increase in the calculation load should be avoided. To this end, the present invention distinguishes controls for the traveling devices from the controls for devices related to the body, and implements control functions for the devices related to the body (hereinafter, body-related devices) into the central arithmetic unit, so as not to unnecessarily increase the calculation load of the central arithmetic unit.

The object is achieved by the invention, as defined by claim 1.

In this configuration, the arithmetic unit includes the body-related device control unit that controls the more than one body-related devices of the vehicle, in addition to the function of executing calculation for actuating the traveling devices mounted in the vehicle. Since the functions of controlling the body-related devices are implemented in the arithmetic unit, the number of microcomputers for controlling the body-related devices is significantly reduced. In addition, communications among the body-related devices can be accelerated. Further, the body-related devices can be brought into a standby state earlier according to a predicted vehicle behavior. The vehicle cruise control device includes, separately from the arithmetic unit, a device controller which controls actuation of the traveling devices, and the functions of controlling the traveling devices are not implemented in the arithmetic unit. Therefore, it is possible to avoid an increase in the calculation load of the arithmetic unit.

The above-described vehicle cruise control device may be such that the more than one body-related devices include at least a lamp or a door.

With the configuration, it is possible to provide a body-related device controller for body-related devices apart from the arithmetic unit, for the control functions for the body-related devices, which functions are hard to implement in the arithmetic unit.

In an arithmetic unit of the above-described vehicle cruise control device, the vehicle external environment recognition unit may recognize the vehicle external environment by means of deep learning.

In this configuration in which the vehicle external environment recognition unit recognizes the vehicle external environment by means of deep learning, the amount of calculation by the arithmetic unit is significantly increased. By having the controlled variables of the traveling devices calculated by the device controller, which is separate from the arithmetic unit, it is possible to more appropriately exert the effect of further improving the responsiveness of the traveling devices with respect to the vehicle external environment.

### ADVANTAGES OF THE INVENTION

As can be seen from the foregoing description, the technology disclosed here enables control of devices related to a body with a simple configuration in a vehicle cruise control device that controls actuation of traveling devices so as to follow a route calculated by an arithmetic unit.

### BRIEF DESCRIPTION OF THE DRAWINGS

FIG. 1 schematically shows a configuration of a vehicle that is controlled by a vehicle cruise control device according to an exemplary embodiment.
FIG. 2 is a schematic view illustrating a configuration of an engine.
FIG. 3 is a block diagram showing a control system of a motor vehicle.
FIG. 4 is an exemplary configuration of an arithmetic unit.
FIG. 5 is a block diagram showing an exemplary configuration of a body-related device control unit and its periphery.

### DESCRIPTION OF EMBODIMENT

An exemplary embodiment will now be described in detail with reference to the drawings. Note that "devices" such as "traveling devices" and "body-related devices" of the present invention indicate devices such as actuators and sensors mounted in a vehicle.

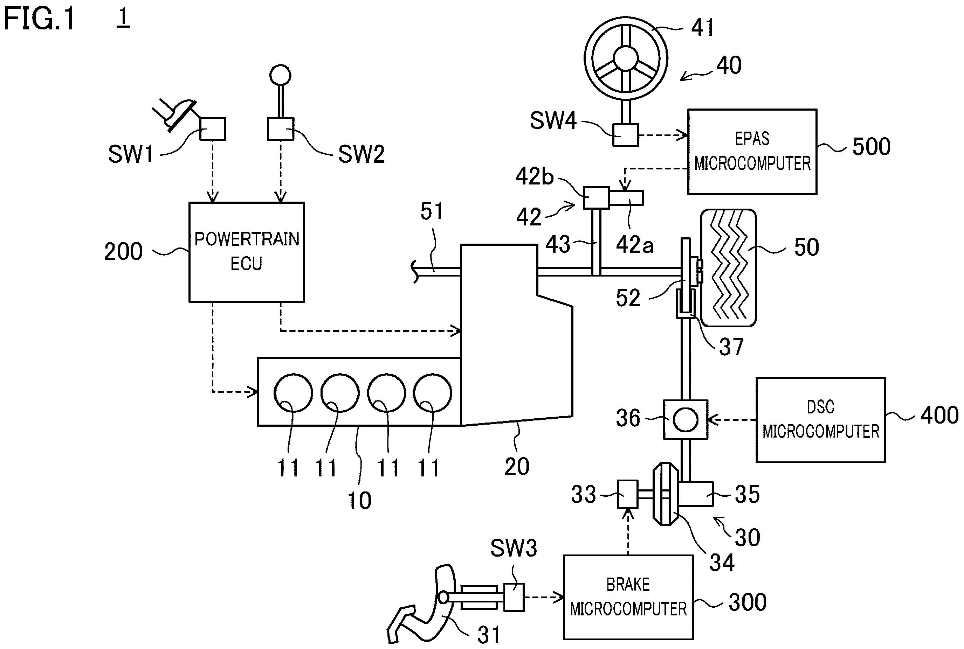

FIG. 1 schematically shows a configuration of a vehicle 1 which is controlled by a vehicle cruise control device 100 (hereinafter simply referred to as a "cruise control device 100") according to the present embodiment. The vehicle 1 is a motor vehicle that allows manual driving in which the vehicle 1 travels in accordance with an operation of an accelerator and the like by a driver, assist driving in which the vehicle 1 travels while assisting an operation by the driver, and autonomous driving in which the vehicle 1 travels without an operation by the driver.

The vehicle 1 includes an engine 10 as a drive source having a plurality of (four in the present embodiment) cylinders 11, a transmission 20 coupled to the engine 10, a brake device 30 that brakes rotation of front wheels 50 serving as driving wheels, and a steering device 40 that steers the front wheels 50 serving as steered wheels.

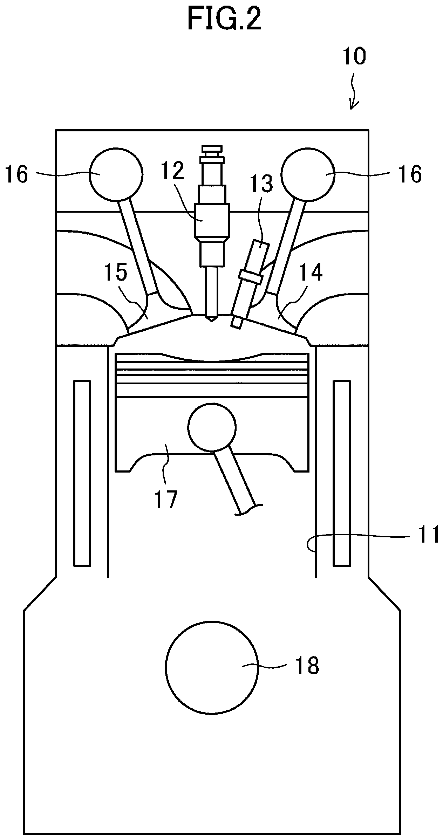

The engine 10 is, for example, a gasoline engine. As shown in FIG. 2, each cylinder 11 of the engine 10 includes an injector 12 for supplying fuel into the cylinder 11 and a spark plug 13 for igniting an air-fuel mixture of the fuel and intake air supplied into the cylinder 11. In addition, the engine 10 includes, for each cylinder 11, an intake valve 14, an exhaust valve 15, and a valve train mechanism 16 that adjusts opening and closing operations of the intake valve 14 and the exhaust valve 15. In addition, the engine 10 is provided with pistons 17 each reciprocates in the corresponding cylinder 11 and a crankshaft 18 connected to the pistons 17 via connecting rods. Note that the engine 10 may be a diesel engine. In a case of adopting a diesel engine as the engine 10, the spark plug 13 does not have to be provided. The injector 12, the spark plug 13, and the valve train mechanism 16 are examples of devices related to a powertrain.

The transmission 20 is, for example, a stepped automatic transmission. The transmission 20 is arranged on one side of the engine 10 along the cylinder bank. The transmission 20 includes an input shaft (not shown) coupled to the crankshaft 18 of the engine 10, and an output shaft (not shown) coupled to the input via a plurality of reduction gears (not shown). The output shaft is connected to an axle 51 of the front wheels 50. The rotation of the crankshaft 18 is changed by the transmission 20 and transmitted to the front wheels 50. The transmission 20 is an example of the devices related to the powertrain.

The engine 10 and the transmission 20 are powertrain devices that generate a driving force for causing the vehicle 1 to travel. The operations of the engine 10 and the transmission 20 are controlled by a powertrain electric control unit (ECU) 200. For example, during the manual driving of the vehicle 1, the powertrain ECU 200 controls a fuel injection amount from and a timing for fuel injection by the injector 12, a timing for ignition by the spark plug 13, timings for opening the intake and exhaust valves 14 and 15 by the valve train mechanism 16, and the duration of opening these valves, based on values such as a detected value of an accelerator position sensor SW1 that detects an accelerator position and the like, which correspond to an operation amount of the accelerator pedal by the driver. In addition, during the manual driving of the vehicle 1, the powertrain ECU 200 adjusts the gear position of the transmission 20 based on a required driving force calculated from a detection result of a shift sensor SW2 that detects an operation of the shift lever by the driver and the accelerator position. In addition, during the assist driving or the autonomous driving of the vehicle 1, the powertrain ECU 200 basically calculates a controlled variable for each traveling device (injector 12 and the like in this case) and outputs a control signal to the corresponding traveling device, so as to achieve a target driving force calculated by an arithmetic unit 110 described hereinafter. The powertrain ECU 200 is an example of device controllers.

The brake device 30 includes a brake pedal 31, a brake actuator 33, a booster 34 connected to the brake actuator 33, a master cylinder 35 connected to the booster 34, dynamic stability control (DSC) devices 36 that adjust the braking force, and brake pads 37 that actually brake the rotation of the front wheels 50. To the axle 51 of the front wheels 50, disc rotors 52 are provided. The brake device 30 is an electric brake, and actuates the brake actuator 33 in accordance with the operation amount of the brake pedal 31 detected by the brake sensor SW3, to actuate the brake pads 37 via the booster 34 and the master cylinder 35. The brake device 30 cramps the disc rotor 52 by the brake pads 37, to brake the rotation of each front wheel 50 by the frictional force generated between the brake pads 37 and the disc rotor 52. The brake actuator 33 and the DSC device 36 are examples of devices related to the brake.

The actuation of the brake device 30 is controlled by a brake microcomputer 300 and a DSC microcomputer 400. For example, during the manual driving of the vehicle 1, the brake microcomputer 300 controls the operation amount of the brake actuator 33 based on a detected value from the brake sensor SW3 that detects the operation amount of the brake pedal 31 by the driver, and the like. In addition, the DSC microcomputer 400 controls actuation of the DSC device 36 to add a braking force to the front wheels 50, irrespective of an operation of the brake pedal 31 by the driver. In addition, during the assist driving or the autonomous driving of the vehicle 1, the brake microcomputer 300 basically calculates a controlled variable for each traveling device (brake actuator 33 in this case) and outputs a control signal to the corresponding traveling device, so as to achieve a target braking force calculated by the arithmetic unit 110 described hereinafter. The brake microcomputer 300 and the DSC microcomputer 400 are examples of the device controllers. Note that the brake microcomputer 300 and the DSC microcomputer 400 may be configured by a single microcomputer.

The steering device 40 includes a steering wheel 41 to be operated by the driver, an electronic power assist steering (EPAS) device 42 that assists the driver in a steering operation, and a pinion shaft 43 coupled to the EPAS device 42. The EPAS device 42 includes an electric motor 42a, and a deceleration device 42b that reduces the driving force from the electric motor 42a and transmits the force to the pinion shaft 43. The steering device 40 is a steering device of a steer-by-wire type, and actuates the EPAS device 42 in accordance with the operation amount of the steering wheel 41 detected by the steering angle sensor SW4, so as to rotate the pinion shaft 43, thereby controlling the front wheels 50. The pinion shaft 43 is coupled to the front wheels 50 through a rack bar (not shown), and the rotation of the pinion shaft 43 is transmitted to the front wheels via the rack bar. The EPAS device 42 is an example of a steering-related device.

The actuation of the steering device 40 is controlled by an EPAS microcomputer 500. For example, during the manual driving of the vehicle 1, the EPAS microcomputer 500 controls the operation amount of the electric motor 42a based on a detected value from the steering angle sensor SW4 and the like. In addition, during the assist driving or the autonomous driving of the vehicle 1, the EPAS microcomputer 500 basically calculates a controlled variable for each traveling device (EPAS device 42 in this case) and outputs a control signal to the corresponding traveling device, so as to achieve a target steering angle calculated by the arithmetic unit 110 described hereinafter. The EPAS microcomputer 500 is an example of the device controllers.

Although will be described later in detail, in the present embodiment, the powertrain ECU 200, the brake microcomputer 300, the DSC microcomputer 400, and the EPAS microcomputer 500 are capable of communicating with one another. In the following description, the powertrain ECU 200, the brake microcomputer 300, the DSC microcomputer 400, and the EPAS microcomputer 500 may be simply referred to as the device controllers.

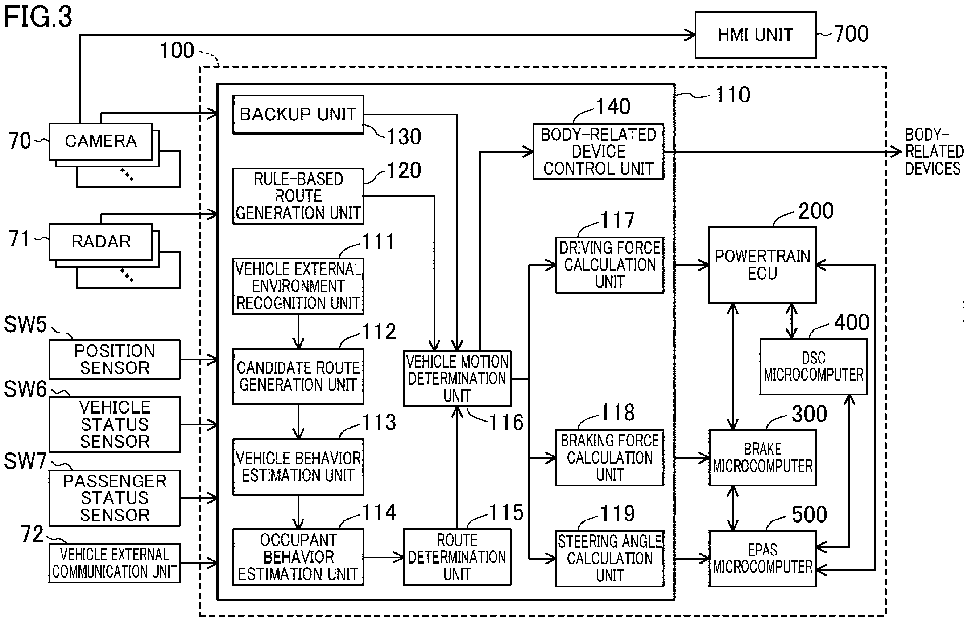

As shown in FIG. 3, the cruise control device 100 of the present embodiment includes the arithmetic unit 110 that determines motions of the vehicle 1 to calculate a route to be traveled by the vehicle 1 and follow the route, so as to enable the assist driving and the autonomous driving. The arithmetic unit 110 is a microprocessor configured by one or more chips, and includes a CPU, a memory, and the like. Note that FIG. 3 shows a configuration to exert functions according to the present embodiment (route generating function described later), and does not necessarily show all the functions implemented in the arithmetic unit 110.

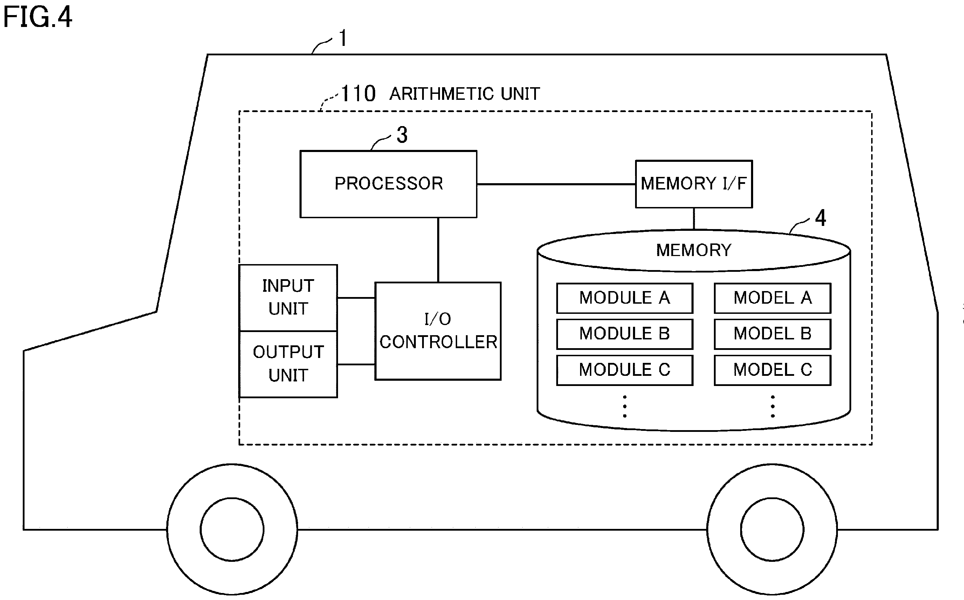

FIG. 4 is an exemplary configuration of the arithmetic unit 110. In the exemplary configuration of FIG. 4, the arithmetic unit 110 includes a processor 3 and a memory 4. The memory 4 stores modules which are each a software program executable by the processor 3. The function of each unit shown in FIG. 3 is achieved by the processor 3 executing the modules stored in the memory 4. In addition, the memory 4 stores data representing a model used in processing by each unit shown in FIG. 3. Note that a plurality of processors 3 and memories 4 may be provided.

As shown in FIG. 3, the arithmetic unit 110 determines a target motion of the vehicle 1 based on outputs from a plurality of sensors and the like, and controls actuation of the devices. The sensors and the like that output information to the arithmetic unit 110 include a plurality of cameras 70 that are provided to the body of the vehicle 1 and the like and take images of the environment outside the vehicle 1 (hereinafter, vehicle external environment); a plurality of radars 71 that are provided to the body of the vehicle 1 and the like and detect a target and the like outside the vehicle 1; a position sensor SW5 that detects the position of the vehicle 1 (vehicle position information) by using a Global Positioning System (GPS); a vehicle status sensor SW6 that acquires a status of the vehicle 1, which includes sensors that detect the behavior of the vehicle, such as a vehicle speed sensor, an acceleration sensor, a yaw rate sensor; and an occupant status sensor SW7 that includes an in-vehicle camera and the like and acquires a status of an occupant on the vehicle 1. In addition, the arithmetic unit 110 receives communication information from another vehicle positioned around the subject vehicle or traffic information from a navigation system, which is received by a vehicle external communication unit 72.

The cameras 70 are arranged to image the surroundings of the vehicle 1 at 360° in the horizontal direction. Each camera 70 takes an optical image showing the vehicle external environment to generate image data. Each camera 70 then outputs the image data generated to the arithmetic unit 110. The cameras 70 are examples of an information acquisition unit that acquires information of the vehicle external environment.

The image data acquired by each camera 70 is also input to an HMI (Human Machine Interface) unit 700, in addition to the arithmetic unit 110. The HMI unit 700 displays information based on the image data acquired, on a display device or the like in the vehicle.

The radars 71 are arranged so that the detection range covers 360° of the vehicle 1 in the horizontal direction, similarly to the cameras 70. The type of the radars 71 is not particularly limited. For example, a millimeter wave radar or an infrared radar may be adopted. The radars 71 are examples of an information acquisition unit that acquires information of the vehicle external environment.

During the assist driving or the autonomous driving, the arithmetic unit 110 sets a traveling route of the vehicle 1 and sets a target motion of the vehicle 1 so as to follow the traveling route of the vehicle 1. To set the target motion of the vehicle 1, the arithmetic unit 110 includes: a vehicle external environment recognition unit 111 that recognizes a vehicle external environment based on outputs from the cameras 70 and the like; a candidate route generation unit 112 that calculates one or more candidate routes that can be traveled by the vehicle 1, in accordance with the vehicle external environment recognized by the vehicle external environment recognition unit 111; a vehicle behavior estimation unit 113 that estimates the behavior of the vehicle 1 based on an output from the vehicle status sensor SW6; an occupant behavior estimation unit 114 that estimates the behavior of an occupant on the vehicle 1 based on an output from the occupant status sensor SW7; a route determination unit 115 that determines a route to be traveled by the vehicle 1; a vehicle motion determination unit 116 that determines the target motion of the vehicle 1 to follow the route set by the route determination unit 115; and a driving force calculation unit 117, a braking force calculation unit 118, and a steering angle calculation unit 119 that calculate target physical amounts (e.g., a driving force, a braking force, and a steering angle) to be generated by the traveling devices in order to achieve the target motion determined by the vehicle motion determination unit 116. The candidate route generation unit 112, the vehicle behavior estimation unit 113, the occupant behavior estimation unit 114, and the route determination unit 115 constitute a route setting unit that sets the route to be traveled by the vehicle 1, in accordance with the vehicle external environment recognized by the vehicle external environment recognition unit 111.

In addition, as safety functions, the arithmetic unit 110 includes a rule-based route generation unit 120 that recognizes an object outside the vehicle according to a predetermined rule and generates a traveling route that avoids the object, and a backup unit 130 that generates a traveling route that guides the vehicle 1 to a safety area such as a road shoulder.

Furthermore, the arithmetic unit 110 includes a body-related device control unit 140 that controls devices related to the body (hereinafter, referred to as body-related devices as appropriate).

### <Vehicle External Environment Recognition Unit>

The vehicle external environment recognition unit 111 receives outputs from the cameras 70 and the radars 71 mounted on the vehicle 1 and recognizes the vehicle external environment. The recognized vehicle external environment includes at least a road and an obstacle. Here, it is assumed that the vehicle external environment recognition unit 111 estimates the vehicle environment including the road and the obstacle by comparing the 3-dimensional information of the surroundings of the vehicle 1 with a vehicle external environment model, based on data from the cameras 70 and the radars 71. The vehicle external environment model is, for example, a learned model generated by deep learning, and allows recognition of a road, an obstacle, and the like with respect to 3-dimensional information of the surroundings of the vehicle.

For example, the vehicle external environment recognition unit 111 identifies a free space, that is, an area without an object, by processing images taken by the cameras 70. In this image processing, for example, a learned model generated by deep learning is used. Then, a 2-dimensional map representing the free space is generated. In addition, the vehicle external environment recognition unit 111 acquires information of a target around the vehicle 1 from outputs of the radars 71. This information is positioning information containing the position, the speed, and the like of the target. Then, the vehicle external environment recognition unit 111 combines the 2-dimensional map thus generated with the positioning information of the target to generate a 3-dimensional map representing the surroundings of the vehicle 1. This process uses information of the installation positions and the imaging directions of the cameras 70, and information of the installation positions and the transmission direction of the radars 71. The vehicle external environment recognition unit 111 then compares the 3-dimensional map with the vehicle external environment model to estimate the vehicle environment including the road and the obstacle. Note that the deep learning uses a multilayer neural network (DNN: Deep Neural Network). An example of the multilayer neural network is convolutional neural network (CNN).

<Candidate Route Generation Unit>

The candidate route generation unit 112 generates candidate routes that can be traveled by the vehicle 1, based on an output from the vehicle external environment recognition unit 111, an output from the position sensor SW5, and information transmitted from the vehicle external communication unit 72. For example, the candidate route generation unit 112 generates a traveling route that avoids the obstacle recognized by the vehicle external environment recognition unit 111, on the road recognized by the vehicle external environment recognition unit 111. The output from the vehicle external environment recognition unit 111 includes, for example, traveling road information related to a traveling road on which the vehicle 1 travels. The traveling road information includes information of the shape of the traveling road itself and information of an object on the traveling road. The information relating to the shape of the traveling road includes the shape of the traveling road (whether it is straight or curved, and the curvature), the width of the traveling road, the number of lanes, the width of each lane, and the like. The information related to the object includes a relative position and a relative speed of the object with respect to the vehicle, an attribute (type, moving direction) of the object, and the like. Examples of the object types include a vehicle, a pedestrian, a road, a section line, and the like.

Here, it is assumed that the candidate route generation unit 112 calculates a plurality of candidate routes by means of a state lattice method, and selects one or more candidate routes from among these candidate routes based on a route cost of each candidate route. However, the routes may be calculated by means of a different method.

The candidate route generation unit 112 sets a virtual grid area on the traveling road based on the traveling road information. The grid area has a plurality of grid points. With the grid points, a position on the traveling road is specified. The candidate route generation unit 112 sets a predetermined grid point as a target reach position. Then, a plurality of candidate routes are calculated by a route search involving a plurality of grid points in the grid area. In the state lattice method, a route branches from a certain grid point to random grid points ahead in the traveling direction of the vehicle. Therefore, each candidate route is set so as to sequentially pass a plurality of grid points. Each candidate route includes time information indicating a time of passing each grid point, speed information related to the speed, acceleration, and the like at each grid point, and information related to other vehicle motion, and the like.

The candidate route generation unit 112 selects one or more traveling routes from the plurality of candidate routes based on the route cost. The route cost herein includes, for example, the lane-centering degree, the acceleration of the vehicle, the steering angle, the possibility of collision, and the like. Note that, when the candidate route generation unit 112 selects a plurality of traveling routes, the route determination unit 115 selects one of the traveling routes.

### <Vehicle Behavior Estimation Unit>

The vehicle behavior estimation unit 113 measures a status of the vehicle, from the outputs of sensors which detect the behavior of the vehicle, such as a vehicle speed sensor, an acceleration sensor, and a yaw rate sensor. The vehicle behavior estimation unit 113 uses a six-degrees-of-freedom (6DoF) model of the vehicle indicating the behavior of the vehicle.

Here, the 6DoF model of the vehicle is obtained by modeling acceleration along three axes, namely, in the "forward/backward (surge)", "left/right (sway)", and "up/down (heave)" directions of the traveling vehicle, and the angular velocity along the three axes, namely, "pitch", "roll", and "yaw". That is, the 6DoF model of the vehicle is a numerical model not grasping the vehicle motion only on the plane (the forward/backward and left/right directions (i.e., the movement along the X-Y plane) and the yawing (along the Z-axis)) according to the classical vehicle motion engineering but reproducing the behavior of the vehicle using six axes in total. The vehicle motions along the six axes further include the pitching (along the Y-axis), rolling (along the X-axis), and the movement along the Z-axis (i.e., the up/down motion) of the vehicle body mounted on the four wheels with the suspension interposed therebetween.

The vehicle behavior estimation unit 113 applies the 6DoF model of the vehicle to the traveling route generated by the candidate route generation unit 112 to estimate the behavior of the vehicle 1 when following the traveling route.

### <Occupant Behavior Estimation Unit>

The occupant behavior estimation unit 114 specifically estimates the driver's health conditions and emotions from a detection result from the occupant status sensor SW7. The health conditions include, for example, good health condition, slightly fatigue, poor health condition, decreased consciousness, and the like. The emotions include, for example, fun, normal, bored, annoyed, uncomfortable, and the like.

For example, the occupant behavior estimation unit 114 extracts a face image of the driver from an image taken by a camera installed inside the vehicle cabin, and identifies the driver. The extracted face image and information of the identified driver are provided as inputs to a human model. The human model is, for example, a learned model generated by deep learning, and outputs the health condition and the emotion of each person who may be the driver of the vehicle 1, from the face image. The occupant behavior estimation unit 114 outputs the health condition and the emotion of the driver output by the human model.

In addition, in a case of adopting a bio-information sensor such as a skin temperature sensor, a heart beat sensor, a blood flow sensor, a perspiration sensor, and the like as the occupant status sensor SW7 for acquiring information of the driver, the occupant behavior estimation unit 114 measures the bio-information of the driver from the output from the bio-information sensor. In this case, the human model uses the bio-information as the input, and outputs the health condition and the emotion of each person who may be the driver of the vehicle 1. The occupant behavior estimation unit 114 outputs the health condition and the emotion of the driver output by the human model.

In addition, as the human model, a model that estimates an emotion of a human in response to the behavior of the vehicle 1 may be used for each person who may be the driver of the vehicle 1. In this case, the model may be constructed by managing, in time sequence, the outputs of the vehicle behavior estimation unit 113, the bio-information of the driver, and the estimated emotional statuses. With this model, for example, it is possible to predict the relationship between changes in the driver's emotion (the degree of wakefulness) and the behavior of the vehicle.

In addition, the occupant behavior estimation unit 114 may include a human body model as the human model. The human body model specifies, for example, the weight of the head (e.g., 5 kg) and the strength of the muscles around the neck supporting against G-forces in the front, back, left, and right directions. The human body model outputs predicted physical and subjective properties of the occupant, when a motion (acceleration G-force or jerk) of the vehicle body is input. The physical property of the occupant is, for example, comfortable/moderate/uncomfortable, and the subjective property is, for example, unexpected/predictable. For example, a vehicle behavior that causes the head to lean backward even slightly is uncomfortable for an occupant. Therefore, a traveling route that causes the head to lean backward can be avoided by referring to the human body model. On the other hand, a vehicle behavior that causes the head of the occupant to lean forward in a bowing manner does not immediately lead to discomfort. This is because the occupant is easily able to resist such a force. Therefore, such a traveling route that causes the head to lean forward may be selected. Alternatively, by referring to the human body model, a target motion can be determined, for example, so that the head of the occupant does not swing, or determined dynamically so that the occupant feels lively.

The occupant behavior estimation unit 114 applies a human model to the vehicle behavior estimated by the vehicle behavior estimation unit 113 to estimate a change in the health conditions or the emotion of the current driver with respect to the vehicle behavior.

### <Route Determination unit>

The route determination unit 115 determines the route to be traveled by the vehicle 1, based on an output from the occupant behavior estimation unit 114. If the number of routes generated by the candidate route generation unit 112 is one, the route determination unit 115 determines that route as the route to be traveled by the vehicle 1. If the candidate route generation unit 112 generates a plurality of routes, a route that an occupant (in particular, the driver) feels most comfortable with, that is, a route that the driver does not perceive as a redundant route, such as a route too cautiously avoiding an obstacle, is selected out of the plurality of candidate routes, in consideration of an output from the occupant behavior estimation unit 114.

<Rule-Based Route Generation Unit>

The rule-based route generation unit 120 recognizes an object outside the vehicle in accordance with a predetermined rule based on outputs from the cameras 70 and radars 71, without a use of deep learning, and generates a traveling route that avoids such an object. Similarly to the candidate route generation unit 112, it is assumed that the rule-based route generation unit 120 also calculates a plurality of candidate routes by means of the state lattice method, and selects one or more candidate routes from among these candidate routes based on a route cost of each candidate route. In the rule-based route generation unit 120, the route cost is calculated based on, for example, a rule of keeping away from a several meter range from the object. Another technique may be used for calculation of the route also in this rule-based route generation unit 120.

Information of a route generated by the rule-based route generation unit 120 is input to the vehicle motion determination unit 116.

### <Backup Unit>

The backup unit 130 generates a traveling route that guides the vehicle 1 to a safety area such as the road shoulder based on outputs from the cameras 70 and radars 71, in an occasion of failure of a sensor and the like or when the occupant is not feeling well. For example, from the information given by the position sensor SW5, the backup unit 130 sets a safety area in which the vehicle 1 can be stopped in case of emergency, and generates a traveling route to reach the safety area. Similarly to the candidate route generation unit 112, it is assumed that the backup unit 130 also calculates a plurality of candidate routes by means of the state lattice method, and selects one or more candidate routes from among these candidate routes based on a route cost of each candidate route. Another technique may be used for calculation of the route also in this backup unit 130.

Information of a route generated by the backup unit 130 is input to the vehicle motion determination unit 116.

### <Vehicle Motion Determination unit>

The vehicle motion determination unit 116 determines a target motion on a traveling route determined by the route determination unit 115. The target motion means steering and acceleration/deceleration to follow the traveling route. In addition, with reference to the 6DoF model of the vehicle, the vehicle motion determination unit 116 calculates the motion of the vehicle on the traveling route selected by the route determination unit 115.

The vehicle motion determination unit 116 determines the target motion to follow the traveling route generated by the rule-based route generation unit 120.

The vehicle motion determination unit 116 determines the target motion to follow the traveling route generated by the backup unit 130.

When the traveling route determined by the route determination unit 115 significantly deviates from a traveling route generated by the rule-based route generation unit 120, the vehicle motion determination unit 116 selects the traveling route generated by the rule-based route generation unit 120 as the route to be traveled by the vehicle 1.

In an occasion of failure of sensors and the like (in particular, cameras 70 or radars 71) or in a case where the occupant is not feeling well, the vehicle motion determination unit 116 selects the traveling route generated by the backup unit 130 as the route to be traveled by the vehicle 1.

### <Physical Amount Calculation Unit>

A physical amount calculation unit includes a driving force calculation unit 117, a braking force calculation unit 118, and a steering angle calculation unit 119. To achieve the target motion, the driving force calculation unit 117 calculates a target driving force to be generated by the powertrain devices (the engine 10, the transmission 20). To achieve the target motion, the braking force calculation unit 118 calculates a target braking force to be generated by the brake device 30. To achieve the target motion, the steering angle calculation unit 119 calculates a target steering angle to be generated by the steering device 40.

### <Body-Related Device Control Unit>

In the present embodiment, the arithmetic unit 110 has a function of controlling the devices related to the body (body-related devices). That is, the body-related device control unit 140 sets operations of the body-related devices of the vehicle 1 such as a lamp and a door, based on outputs from the vehicle motion determination unit 116, and generates control signals that control the body-related devices. The control signals generated are transmitted to the body-related devices. This allows significant reduction of the number of microcomputers for controlling the body-related devices. In addition, communications among the body-related devices can be accelerated.

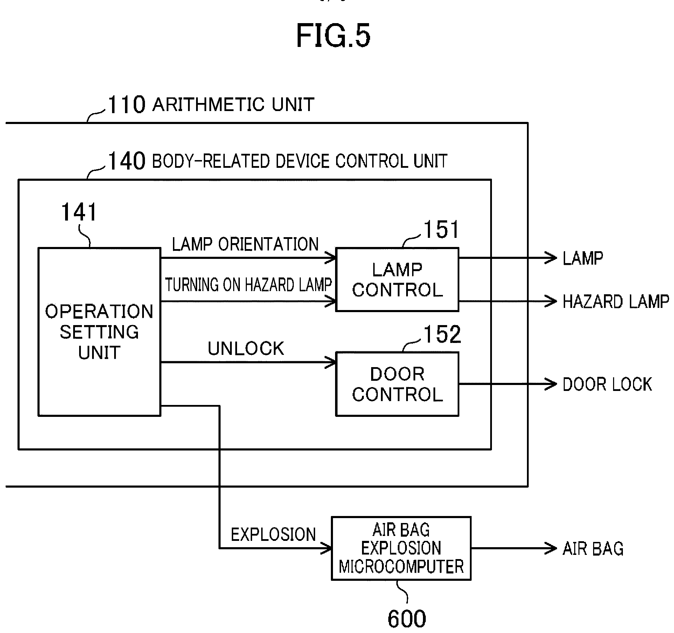

FIG. 5 is a block diagram showing an exemplary configuration of the body-related device control unit 140 and its periphery. An operation setting unit 141 determines, for example, the directions of lamps, while the vehicle 1 follows the traveling route determined by the route determination unit 115. A lamp control unit 151, in response to an instruction related to the direction of a lamp from the operation setting unit 141, transmits a control signal to set the direction of the lamp to that lamp. In addition, for example, at a time of guiding the vehicle 1 to the safety area set by the backup unit 130, the operation setting unit 141 sets operations so that the hazard lamp is turned on and the doors are unlocked after the vehicle reaches the safety area. The lamp control unit 151, in response to an instruction to turn on the hazard lamp from the operation setting unit 141, transmits a control signal to turn on the hazard lamp to that hazard lamp. A door control unit 152, in response to an instruction to unlock a door from the operation setting unit 141, transmits a control signal to unlock the door, to that door. Other body-related devices include, for example, windows, a horn, and a pretensioner.

In addition, a controller may be provided separated from the arithmetic unit 110, for some body-related devices. For example, if an air bag control function is implemented in the arithmetic unit 110, there is a risk that an electric current sufficient for heating a squib of an air bag inflator may not be supplied. In view of this, in the example shown in FIG. 5, an air bag explosion microcomputer 600 is provided for the air bag, separately from the arithmetic unit 110. The air bag explosion microcomputer 600 is an example of the body-related device controller. The arithmetic unit 110, in response to an instruction from the operation setting unit 141 to constrain the occupant with the air bag, transmits the instruction to the air bag explosion microcomputer 600. Upon reception of the instruction, the air bag explosion microcomputer 600 outputs a control signal to actuate the air bag.

In addition, by implementing control functions for the body-related devices into the arithmetic unit 110, the body-related devices can be brought into a standby state earlier according to a predicted vehicle behavior. For example, it enables a control such that weakening the operation of the pretensioner when a possibility of collision is predicted.

For example, to match the blinking timing of hazard lamps arranged in front, rear, left, and right portions of the vehicle, and on door mirrors in a structure of a vehicle with body-related microcomputers arranged separately in different zones of the vehicle, it is necessary to set a special harness for the hazard lamps and arrange additional hardware to tun on and off an electric current with a single relay.

With the present embodiment, the body-related device control unit 140 is solely responsible for supplying power to a plurality of hazard lamps. It is therefore easily possible to highly accurately control the blinking timing.

Another example is a so-called Omotenashi control (hospitality control) which actuates a series of body-related devices sequentially as follows: unlocking a door lock upon reception of electromagnetic waves dispatched from a smart key of a vehicle owner who is approaching the vehicle being parked; gradually increasing illumination of a vehicle interior lamp as a welcome lamp; and displaying a brand icon on a display of a center console when the driver starts to pull the door knob to open the door. To achieve this control in a structure having body-related microcomputers arranged in different zones of the vehicle, cumbersome controls will be required to instruct each microcomputer through a vehicle interior network to predict the time necessary for booting each device and wake up the devices in advance, so that power is successively supplied to each zone of the vehicle and the devices operate consecutively.

With the present embodiment, the body-related device control unit 140 collectively powers the devices. It is thus easily possible to achieve an Omotenashi-control (hospitality control). Further, modification in the specification of the Omotenashi-control is easily possible by modifying the program of the body-related device control unit 140.

### <Output Destination of Arithmetic Unit>

An arithmetic result of the arithmetic unit 110 is output to the powertrain ECU 200, the brake microcomputer 300, the EPAS microcomputer 500, and the body-related microcomputer 700. Specifically, information related to the target driving force calculated by the driving force calculation unit 117 is input to the powertrain ECU 200. Information related to the target braking force calculated by the braking force calculation unit 118 is input to the brake microcomputer 300. Information related to the target steering angle calculated by the steering angle calculation unit 119 is input to the EPAS microcomputer 500.

In addition, the arithmetic unit 110 transmits the control signal generated by the body-related device control unit 140 to body-related devices for doors and lamps.

As described hereinabove, the powertrain ECU 200 basically calculates fuel injection timing for the injector 12 and ignition timing for the spark plug 13 so as to achieve the target driving force, and outputs control signals to these relevant traveling devices. The brake microcomputer 300 basically calculates a controlled variable of the brake actuator 33 so as to achieve the target driving force, and outputs a control signal to the brake actuator 33. The EPAS microcomputer 500 basically calculates an electric current amount to be supplied to the EPAS device 42 so as to achieve the target steering angle, and outputs a control signal to the EPAS device 42.

As described hereinabove, in the present embodiment, the arithmetic unit 110 only calculates the target physical amount to be output from each traveling device, and the controlled variables of traveling devices are calculated by the device controllers 200 to 500. This reduces the amount of calculation by the arithmetic unit 110, and improves the speed of calculation by the arithmetic unit 110. In addition, since each of the device controllers 200 to 500 simply has to calculate the actual controlled variables and output control signals to the traveling devices (injector 12 and the like), the processing speed is fast. As a result, the responsiveness of the traveling devices to the vehicle external environment can be improved.

In addition, by having the device controllers 200 to 500 calculate the controlled variables, the calculation speed of the arithmetic unit 110 can be slower than those of the device controllers 200 to 500, because the arithmetic unit 110 only needs to roughly calculate physical amounts. Thus, the accuracy of calculation by the arithmetic unit 110 is improved.

Thus, the present embodiment includes: an arithmetic unit 110, and device controllers 200 to 500 that control actuation of one or more traveling devices (injector 12 and the like) mounted in a vehicle 1, based on an arithmetic result from the arithmetic unit 110. The arithmetic unit 110 includes: a vehicle external environment recognition unit 111 that recognizes a vehicle external environment based on outputs from a camera 70 and a radar 71 which acquires information of the vehicle external environment; a route setting unit (candidate route generation unit 112 and the like) that sets a route to be traveled by the vehicle 1, in accordance with the vehicle external environment recognized by the vehicle external environment recognition unit 111; a vehicle motion determination unit 116 that determines the target motion of the vehicle 1 to follow the route set by the route setting unit; and a body-related device control unit 140 that sets operations of one or more body-related devices of the vehicle, based on an output from the vehicle motion determination unit 116, and generates control signals that control the body-related device. That is, the arithmetic unit 110 includes the body-related device control unit 140 that controls the body-related devices of the vehicle, in addition to the function of executing calculation for actuating the traveling devices mounted in the vehicle. Since the functions of controlling the body-related devices are implemented in the arithmetic unit 110, the number of microcomputers for controlling the body-related device is significantly reduced. In addition, communications among the body-related devices can be accelerated. In addition, the body-related devices can be brought into a standby state earlier according to a predicted vehicle behavior. The vehicle cruise control device 100 includes, separately from the arithmetic unit 110, the device controllers 200 to 500 that control actuation of the traveling devices, and the functions of controlling the traveling devices are not implemented in the arithmetic unit 110. Therefore, it is possible to avoid an increase in the calculation load of the arithmetic unit 110.

In addition, the arithmetic unit 110 includes physical amount calculation units 117 to 119 that calculate target physical amounts to be generated by the traveling devices for achieving a target motion determined by the vehicle motion determination unit 116. The device controllers 200 to 500 calculate controlled variables of the traveling devices to achieve the target physical amounts calculated by the physical amount calculation units 117 to 119, and outputs control signals to the traveling devices. As described hereinabove, the arithmetic unit 110 only calculates the physical amounts that should be achieved, and the actual controlled variables of the traveling devices are calculated by the device controllers 200 to 500. This reduces the amount of calculation by the arithmetic unit 110, and improves the speed of calculation by the arithmetic unit 110. In addition, since the device controllers 200 to 500 simply have to calculate the actual controlled variables and output control signals to the associated traveling devices, the processing speed is fast. As a result, the responsiveness of the traveling devices to the vehicle external environment can be improved.

In particular, in the present embodiment, the vehicle external environment recognition unit 111 uses deep learning to recognize the vehicle external environment, which increases the amount of calculation particularly in the arithmetic unit 110. By having the controlled variables of the traveling devices calculated by the device controllers 200 to 500, which are separate from the arithmetic unit 110, it is possible to more appropriately exert the effect of further improving the responsiveness of the traveling devices with respect to the vehicle external environment.

### <Other Controls>

The driving force calculation unit 117, the braking force calculation unit 118, and the steering angle calculation unit 119 may modify the target driving force in accordance with the status of the driver of the vehicle 1, during the assist driving of the vehicle 1. For example, when the driver enjoys driving (when the emotion of the driver is "Fun"), the target driving force and the like may be reduced to make driving as close as possible to manual driving. On the other hand, when the driver is not feeling well, the target driving force and the like may be increased to make the driving as close as possible to the autonomous driving.

### (Other Embodiments)

The present invention is not limited to the embodiment described above. Any change can be made within the scope of the claims as appropriate.

For example, in the above-described embodiment, the route determination unit 115 determines the route to be traveled by the vehicle 1. However, the present invention is not limited to this, and the route determination unit 115 may be omitted. In this case, the vehicle motion determination unit 116 may determine the route to be traveled by the vehicle 1. That is, the vehicle motion determination unit 116 may serve as a part of the route setting unit as well as a target motion determination unit.

In addition, in the above-described embodiment, the driving force calculation unit 117, the braking force calculation unit 118, and the steering angle calculation unit 119 calculate target physical amounts such as a target driving force. However, the present invention is not limited to this. The driving force calculation unit 117, the braking force calculation unit 118, and the steering angle calculation unit 119 may be omitted, and the target physical amounts may be calculated by the vehicle motion determination unit 116. That is, the vehicle motion determination unit 116 may serve as the target motion determination unit as well as a physical amount calculation unit.

### INDUSTRIAL APPLICABILITY

The technology disclosed herein is usable as a vehicle cruise control device to control traveling of the vehicle.

### DESCRIPTION OF REFERENCE CHARACTERS

- 1: Vehicle
- 12: Injector (Traveling Device)
- 13: Spark Plug (Traveling Device)
- 16: Valve Train Mechanism (Traveling Device)
- 20: Transmission (Traveling Device)
- 33: Brake Actuator (Traveling Device)
- 42: EPAS Device (Traveling Device)
- 100: Vehicle Cruise Control Device
- 110: Arithmetic Unit
- 111: Vehicle External Environment Recognition Unit
- 112: Candidate Route Generation Unit (Route Setting Unit)
- 113: Vehicle Behavior Estimation Unit (Route Setting Unit)
- 114: Occupant Behavior Estimation Unit (Route Setting Unit)
- 115: Route Determination unit (Route Setting Unit)
- 116: Vehicle Motion Determination Unit (Target Motion Determination Unit)
- 140: Body-Related Device Control Unit
- 200: Powertrain ECU (Device Controller)
- 300: Brake Microcomputer (Device Controller)
- 400: DSC Microcomputer (Device Controller)
- 500: EPAS Microcomputer (Device Controller)
- 600: Air Bag Explosion Microcomputer (Body-Related Device Controller)

## Claims

1. A vehicle cruise control device (100) that controls traveling of a vehicle (1), the vehicle cruise control device (100) comprising:
an arithmetic unit (110); and
a device controller (200, 300, 400, 500) that controls actuation of one or more traveling devices mounted in the vehicle (1), based on an arithmetic result from the arithmetic unit (110), wherein
the arithmetic unit (110) includes:
a vehicle external environment recognition unit (111) that recognizes a vehicle external environment based on an output from an information acquisition unit that acquires information of the vehicle external environment;
a route setting unit (112, 113, 114, 115) that sets a route to be traveled by the vehicle (1), in accordance with the vehicle external environment recognized by the vehicle external environment recognition unit (111) ;
a target motion determination unit that determines a target motion of the vehicle (1) to follow the route set by the route setting unit; and
a body-related device control unit (140) that sets operations of a first device that is one or more body-related devices of the vehicle (1), based on an output from the target motion determination unit, and generates control signals that control the first device,
**characterized in that**
the vehicle cruise control device (100) further comprises:
a body-related device controller that is separate from the arithmetic unit (110), and generates a control signal that controls an air bag which is one of more than one body-related devices and is different the first device, in response to an instruction from the arithmetic unit (110).

2. The vehicle cruise control device (100) of claim 1, wherein the first device includes at least a lamp or a door.

3. The vehicle cruise control device (100) of claim 1 or 2, wherein
the vehicle external environment recognition unit (111) recognizes the vehicle external environment by means of deep learning.

## Patentansprüche

1. Geschwindigkeitsregelvorrichtung eines Fahrzeugs (100), die das Fahren eines Fahrzeugs (1) steuert, die Geschwindigkeitsregelvorrichtung eines Fahrzeugs (100) umfassend:
eine Recheneinheit (110); und
eine Vorrichtungssteuerung (200, 300, 400, 500), die die Betätigung einer oder mehrerer in dem Fahrzeug (1) angebrachter Fahrvorrichtungen anhand eines arithmetischen Ergebnisses der Recheneinheit (110) steuert, wobei
die Recheneinheit (110) beinhaltet:
eine Außenumgebungserkennungseinheit eines Fahrzeugs (111), die eine Fahrzeugaußenumgebung anhand einer Ausgabe von einer Informationserfassungseinheit identifiziert, die Informationen über die Fahrzeugaußenumgebung erfasst;
eine Routeneinstelleinheit (112, 113, 114, 115), die eine von dem Fahrzeug (1) zu fahrende Route in Übereinstimmung mit der von der Außenumgebungserkennungseinheit eines Fahrzeugs (111) identifizierten Fahrzeugaußenumgebung einstellt;
eine Zielbewegungsbestimmungseinheit, die eine Zielbewegung des Fahrzeugs (1) bestimmt, um der von der Routeneinstelleinheit eingestellten Route zu folgen; und
eine karosseriebezogene Vorrichtungsteuereinheit (140), die den Betrieb einer ersten Vorrichtung, bei der es sich um eine oder mehrere karosseriebezogene Vorrichtungen des Fahrzeugs (1) handelt, anhand einer Ausgabe von der Zielbewegungsbestimmungseinheit einstellt und Steuersignale erzeugt, die die erste Vorrichtung steuern,
**dadurch gekennzeichnet, dass**
die Geschwindigkeitsregelvorrichtung eines Fahrzeugs (100) ferner umfasst:
eine karosseriebezogene Vorrichtungssteuerung, die von der Recheneinheit (110) getrennt ist und ein Steuersignal erzeugt, das einen Airbag steuert, der eine von mehr als einer karosseriebezogenen Vorrichtung ist und sich von der ersten Vorrichtung unterscheidet, als Reaktion auf einen Befehl von der Recheneinheit (110).

2. Geschwindigkeitsregelvorrichtung eines Fahrzeugs (100) nach Anspruch 1, wobei die erste Vorrichtung mindestens eine Lampe oder eine Tür beinhaltet.

3. Geschwindigkeitsregelvorrichtung eines Fahrzeugs (100) nach Anspruch 1 oder 2, wobei die Außenumgebungserkennungseinheit eines Fahrzeugs (111) die Fahrzeugaußenumgebung mit Hilfe von Deep-Learning identifiziert.

## Revendications

1. Dispositif de régulation de la vitesse d'un véhicule (100) qui régule le déplacement d'un véhicule (1), le dispositif de régulation de la vitesse d'un véhicule (100) comprenant :
une unité arithmétique (110) ; et
un régulateur de dispositif (200, 300, 400, 500) qui régule l'actionnement d'un ou plusieurs dispositifs de déplacement montés dans le véhicule (1), sur la base d'un résultat arithmétique de l'unité arithmétique (110),
l'unité arithmétique (110) incluant :
une unité de reconnaissance de l'environnement externe du véhicule (111) qui reconnaît un environnement externe du véhicule sur la base d'une sortie d'une unité d'acquisition d'informations qui acquiert des informations sur l'environnement externe du véhicule ;
une unité de définition d'itinéraire (112, 113, 114, 115) qui définit un itinéraire selon lequel le véhicule (1) se déplace, en fonction de l'environnement externe du véhicule reconnu par l'unité de reconnaissance de l'environnement externe du véhicule (111) ;
une unité de détermination de mouvement cible qui détermine un mouvement cible du véhicule (1) pour suivre l'itinéraire défini par l'unité de définition d'itinéraire ; et
une unité de régulation de dispositif lié à la carrosserie (140) qui définit les opérations d'un premier dispositif qui est un ou plusieurs dispositifs liés à la carrosserie du véhicule (1), sur la base d'une sortie de l'unité de détermination de mouvement cible, et génère des signaux de régulation qui régulent le premier dispositif,
**caractérisé en ce que**
le dispositif de régulation de la vitesse d'un véhicule (100) comprend en outre :
un régulateur de dispositif lié à la carrosserie qui est séparé de l'unité arithmétique (110), et génère un signal de régulation qui régule un coussin gonflable qui est l'un de plus d'un dispositif lié à la carrosserie et qui est différent du premier dispositif, en réponse à une instruction de l'unité arithmétique (110).

2. Dispositif de régulation de la vitesse d'un véhicule (100) selon la revendication 1, dans lequel le premier dispositif inclut au moins une lampe ou une porte.

3. Dispositif de régulation de la vitesse d'un véhicule (100) selon la revendication 1 ou 2, dans lequel l'unité de reconnaissance de l'environnement externe du véhicule (111) reconnaît l'environnement externe du véhicule au moyen d'un apprentissage profond.
